# EUROPEAN PATENT SPECIFICATION

(11) **EP 3 932 747 B1**
(45) Date of publication and mention of the grant of the patent: **21.06.2023**
(21) Application number: 20718761.8
(22) Date of filing: 25.02.2020
(51) Int. Cl.: B60R 13/04

(54) **TRUNK LID STRUCTURE FOR VEHICLE, AND VEHICLE**
HECKKLAPPENSTRUKTUR FÜR FAHRZEUG UND FAHRZEUG
STRUCTURE DE COUVERCLE DE COFFRE POUR UN VÉHICULE ET VÉHICULE

(30) Priority: 25.02.2019 CN 201910136162
(43) Date of publication of application: 05.01.2022
(73) Proprietor: PSA Automobiles SA, 78300 Poissy (FR)
(72) Inventor: XI, Qian, Shanghai 200233 (CN); ZHU, Wenhui, Shanghai 200233 (CN); ZHU, Yipeng, Shanghai 200233 (CN); DING, Tingting, Shanghai 200233 (CN); WANG, Yue, Shanghai 200233 (CN)
(86) International application number: PCT/IB2020/051574
(87) International publication number: WO 2020/174374

(56) References cited:
- EP-A1- 2 019 025
- JP-A- 2004 017 850
- JP-A- 2013 075 548
- JP-A- 2015 096 763
- JP-A- 2017 061 255

## Description

### FIELD OF TECHNOLOGY

The present disclosure relates to the technical field of vehicle parts, and in particular, to a trunk lid structure fora vehicle and a vehicle.

### BACKGROUND

Recently, a garnish strip is disposed on a trunk lid of an automobile to beautify the vehicle. Generally, the trunk lid garnish is in a shape of strip and extends in the Y direction of the vehicle, and two trunk lights are disposed on the lower side of the trunk lid garnish and at both sides of the trunk lid. Due to the arc-shaped appearance of the trunk lid, the two end portions of the trunk lid garnish do not match well the arc-shaped appearance of the trunk lid, so that gaps are formed between the trunk lid garnish and the trunk lid and between trunk lid garnish and the trunk lights in the X direction and the perceived quality of the vehicle is affected.
From the prior art JP2017061255A JP2004017850, JP2013075548, P20150967763 is knowr JP 2017 061255 A discloses a trunk lid structure according to the preamble of clam 1.

### SUMMARY

### (I) Technical problems to be solved

A first object of the present disclosure is to provide a trunk lid structure for a vehicle that can effectively improve the gap between the trunk lid garnish and the trunk lid and the trunk light in the X direction, so as to solve the problems in the prior art that the gap between the trunk lid garnish and the trunk lid and the trunk light is too large, which affects the perceived quality of the vehicle.

A second object of the present disclosure is to provide a vehicle that can effectively improve the gap between the trunk lid garnish and the trunk lid and the trunk light in the X direction, so as to solve the problems in the prior art that gaps between the trunk lid garnish and the trunk lid and the trunk light is too large, which affects the perceived quality of the vehicle.

### (II)Technical solutions

In order to solve the technical problems above, m one aspect, the present disclosure provides a trunk lid structure for a vehicle, including: a trunk lid body; a trunk light mounted on the trunk lid body; and a trunk lid garnish located above the trunk light, and the middle portion of the trunk lid garnish is installed on the trunk lid body and two side end portions of the trunk lid garnish are respectively mounted on the trunk light by brackets.

According to the invention the bracket includes a first portion extending in a vertical direction for fixedly connecting with a side end portion of the trunk lid garnish and a second portion extending in a horizontal direction for fixedly connecting with a trunk light. According to the invention a trunk lid structure for a vehicle according to claim 1 is provided.

According to an embodiment of the present disclosure, the first portion is fixedly connected with the side end portion of the trunk li d garnish by a first connecting structure, a second connecting structure, a third connecting structure, and a fourth connecting structure sequentially arranged from the middle to the side end.

According to an embodiment of the present disclosure, the first connecting structure and the second connecting structure respectively include a lock plate disposed on the first portion and extending from the first portion to the trunk lid garnish; a lock slot disposed on the trunk lid garnish to match to the lock plate so as to form a fixed connection.

According to an embodiment of the present disclosure, the lock plate includes a lock plate body extending from the first portion toward the trunk lid garnish and a lock block disposed at an end of the lock plate body.

According to an embodiment of the present disclosure, the first connecting structure includes two lock plates which are arranged in parallel and inserted into one lock slot on the trunk lid garnish at the same time to form a fixed connection.

According to an embodiment of the present disclosure, the lock block of an upper lock plate is disposed on the upper side of the end of the corresponding lock plate body, and the lock block of a lower lock plate is disposed on the lower side of the corresponding lock plate body.

According to an embodiment of the present disclosure, the third connecting structure includes: a baffle disposed obliquely on the first portion from the trunk lid 2 garnish to the first portion; and a first insertion plate disposed on the trunk lid garnish and extending from the trunk lid garnish to the first portion, wherein a plurality of ribs are arranged on the first insertion plate in parallel extending along the extending direction of the first insertion p late, and the plurality of ribs having a height gradually decreased from the trunk lid garnish to the first portion to match the oblique direction of the baffle.

According to an embodiment of the present disclosure, the fourth connecting structure includes: an insertion slot disposed on the first portion; a second insertion plate disposed on the trunk lid garnish and extending from the trunk lid garnish to the first portion, wherein a lock plate is disposed at the edge of the insertion slot and extends toward the trunk lid garnish, and a lock ho le corresponding to the lock block of the lock plate is disposed on the second insertion plate, when the second insertion plate is inserted into the insertion slot, the lock block matches the lock hole to forma fixed connection.

In another aspect, the present disclosure also provides a vehicle including the trunk lid structure for a vehicle as described above.

### (III) Beneficial effects

The technical solution above of the present disclosure has the following advantages:

The trunk lid structure for a vehicle provided by the present disclosure includes a trunk lid body; a trunk light mounted on the trunk lid body; and a trunk lid garnish located above the trunk light, and the middle portion of the trunk lid garnish is installed on the trunk lid body and two side end portions of the trunk lid garnish are respectively mounted on the trunk light by brackets. As a result, the trunk lid garnish can better fit the upper panel of the trunk lid and the trunk light in the X and Z directions, thereby effectively improving gaps between the trunk lid garnish and the trunk lid and the trunk light in the X direction, thereby improving the perceived quality of the vehicle.

### BRIEF DESCRIPTION OF THE DRA WINGS

Fig. 1 is a schematic diagram of a trunk lid structure;
Fig. 2 is a schematic diagram of a trunk lid garnish;
Fig. 3 is an enlarged view of an area C in Fig. 2; 3
Fig. 4 is a schematic diagram of the installation of brackets and the trunk light;
Fig. 5 is a schematic diagram of the installation of the trunk lid garnish and the bracket;
Figs. 6 and 7 is enlarged views of areas A and B in Fig. 2;
Fig. 8 is a schematic diagram of a bracket;
Fig. 9 is a schematic diagram of the connection between of brackets and the trunk light;
Fig. 10 is a schematic structural diagram of a lock plate and a lock slot; and
Figs. 11 to 14 are cross-sectional views taken along A-A, B-B, D-D, and C-C in Fig. 9.

In the drawings,

| | | | |
|---|---|---|---|
| 10 | trunk lid body | 11 | upper plate of the trunk lid |
| 12 | lower plate of the trunk lid | 20 | trunk lid garnish |
| 21, 23 | side end portion | 22 | middle portion |
| 30 | trunk light | 40 | bracket |
| 41 | first portion | 42 | second portion |
| 421 | positioning hole | 422 | connecting hole |
| 423 | boss | 321 | positioning pin |
| 322 | fixing structure | 001 | lock plate |
| 003 | lock slot | 020 | lock plate body |
| 010 | lock block | 100 | first connecting structure |
| 101 | first upper lock plate | 102 | first lower lock plate |
| 111, 112 | lock block | 103 | first lock slot |
| 200 | second connecting structure | 201 | second lock plate |
| 211 | lock block | 203 | second lock slot |
| 300 | third connecting structure | 301 | baffle |
| 302 | first insertion plate | 400 | fourth connecting structure |
| 401 | fourth lock plate | 411 | lock block |
| 402 | second insertion plate | 403 | lock hole |
| 404 | insertion slot | | |

### DETAILED DESCRIPTION

In order to make the object, technical solutions and advantages of the embodiments of the present disclosure more clear, the technical solutions in the embodiments of the present disclosure are clearly and completely described in the following with reference to the accompanying drawings in the embodiments of the present disclosure. Obviously, these embodiments are a part of the embodiments of the present disclosure, and not all of the embodiments. All other embodiments obtained by a person of ordinary skill in the art based on the embodiments of the present disclosure without any creative work belong to the scope of the present disclosure.

In the present disclosure, when an observer sits in the vehicle in a direction facing the front of the vehicle, the direction in which the observer faces forward is the X direction, the left direction of the observer is the Y direction, and the direction when the observer looks upwards is the Z direction.

The trunk lid of an automobile is usually provided with a trunk lid garnish and a trunk light. The trunk lid garnish has a long strip shape and is disposed on the trunk lid of the vehicle along the width direction (i.e., the Y direction) of the vehicle. The trunk lid garnish is usually made of EPP. The trunk light is located at the left and right sides of the vehicle, that is, on the left and right sides of the trunk lid. The upper and lower positions of the trunk light on the trunk lid are below the trunk lid garnish and are directly adjacent to the trunk lid garnish.

Due to the arc-shaped appearance of the vehicle and the long strip shape structure of the trunk lid garnish, the two end portions of the trunk lid garnish do not fit well with the trunk lid when the trunk lid garnish is mounted, so that large gaps are formed between the trunk lid garnish and the trunk lid and between trunk lid garnish and the trunk lights in the X direction and thus the perceived quality of the vehicle is affected.

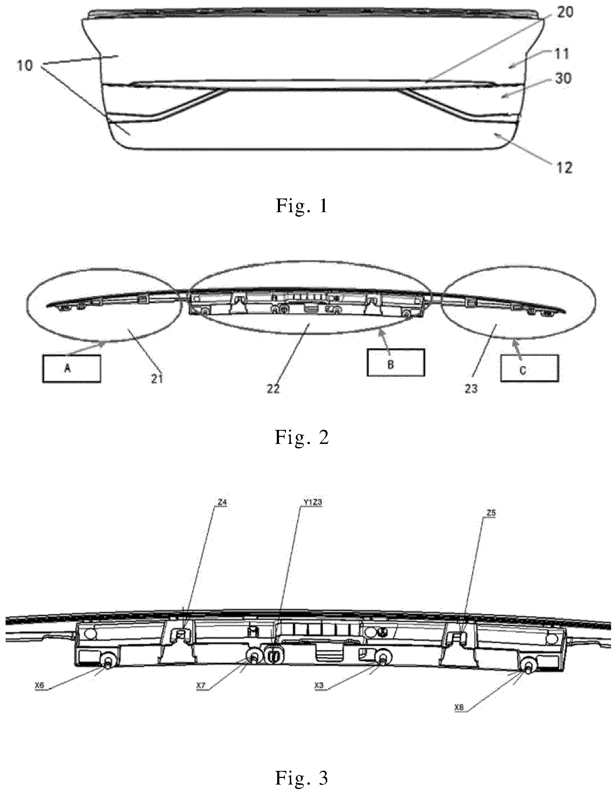

According to the embodiment of the present disclosure, as shown in Fig. 1, the trunk lid structure includes a trunk lid body 10, a trunk lid garnish 20, and a trunk light 30.
The trunk li d garnish 20 is disposed on the trunk li d body I O in the width direction of the vehicle, and under the trunk lid garnish 20, two trunk lights 30 are respectively disposed at left and right sides of the trunk lid body 10. Due to the installation of the trunk lid 5 garnish 20, the trunk lid body IO is divided into an upper plate of the trunk lid 11 and a lower p late of the trunk lid 12.

As shown in Fig. 2, for convenience of description, the trunk lid garnish 20 is divided into a middle portion and two side end portions, such as the middle portion 22 (area C) and the left side end portion 23 (area B) and right side end portion 21 (area A) shown in Fig. 2 (left and right refer to directions viewed from the rear of the vehicle after the trunk lid garnish is mounted on the trunk lid).

In order to ensure that the two side end portions of the trunk lid garnish better fit the are shape of the vehicle, according to this embodiment, the middle portion 22 is mounted on the sheet metal of the upper p late of the trunk lid 11 of the trunk lid body I O, and the two side end portions 21 and 23 are respectively mounted on the trunk light 30 by brackets 40. A detailed view of the middle portion 22 is shown in Fig. 3 and a plurality of X-direction fixing bolts, a plurality of Z-direction positioning hole, and a positioning tab that can be fixed in the Z-direction and the Y-direction meanwhile are provided thereon. The present disclosure is not limited to this, and the middle portion 22 and the sheet metal of the upper plate of the trunk lid 11 can be connected using a conventional connection manner in the art, so a detailed description thereof is omitted herein.

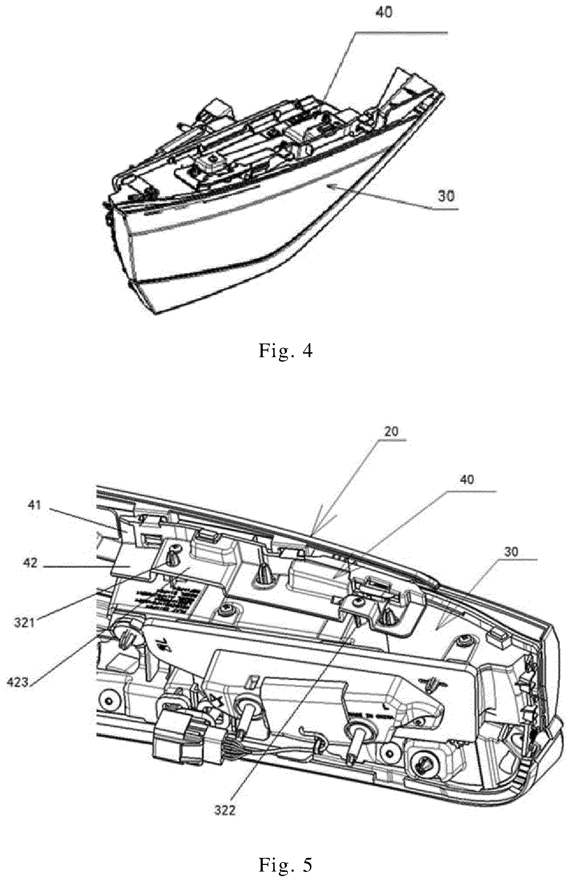

Two side end portions 21 and 23 of the trunk lid garnish 20 may be fixedly connected with the trunk light 30 by brackets 40 fixed on the trunk light 30. The brackets 40 and the trunk light 30 are fixedly connected firstly, as shown in Fig. 4. Then, the bracket 40 and the trunk light 30 that have been fixedly connected together are fixedly connected to the sheet metal of the lower plate of the trunk lid 12 of the trunk lid body 10, so that the trunk light 30 is fixedly connected to the trunk lid body 10. Finally, the two side end portions 21 and 23 of the trunk lid garnish are respectively connected to the bracket 40, as shown in Fig. 5. The trunk light 30 and the sheet metal of the lower plate of the trunk lid 12 can be connected by a conventional connection method in the art, so detailed descriptions thereof are omitted herein.

The structure of the brackets 40, the side end portions 21 and 23 of the trunk lid garnish 20, and the connection manner of the brackets 40 and the trunk lights 30 and the side end portions 21 and 23 of the trunk lid garnish 20 are described in detail below.

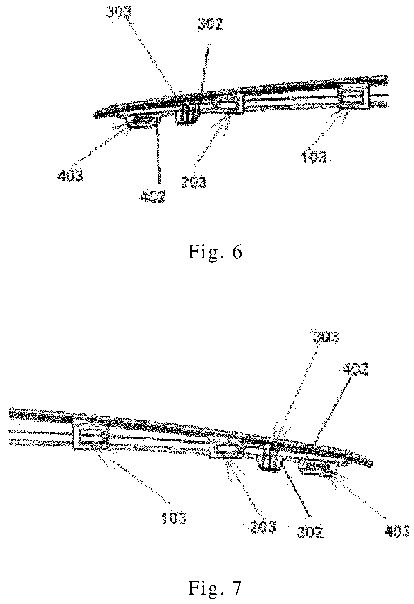

The two side end portions 21 and 23 of the trunk lid garnish 20 has specific structures as shown in Figs. 6 and 7. Since two side end portions 21 and 23 are symmetrical about the vehicle's center axis, they have the similar structure and thus the structure of the side end portions 23 will be described as an example.

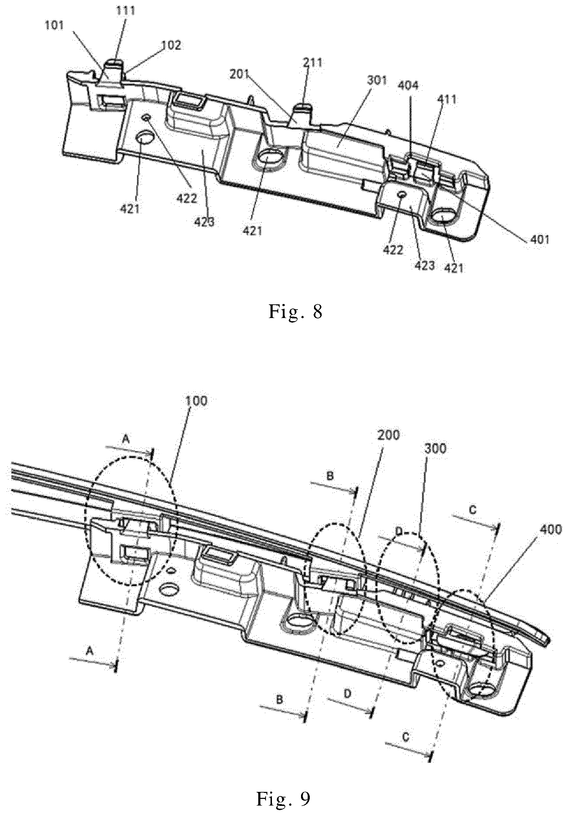

Fig. 8 is a schematic structural diagram of a bracket. The bracket 40 as shown in Fig. 8 may form fit connection as shown in Fig. 9 with the side end portions 23 as shown in Fig. 7.

As can be seen from Fig. 8, the bracket 40 includes a first portion 41 extending in a vertical direction for fixedly connecting with the side end portion 23 of the trunk lid garnish 20 and a second portion 42 extending in a horizontal direction for fixedly connecting with a trunk light 30.

The second portion 42 extends in the horizontal direction and is located directly on the trunk light 30 to form a Z-direction connection with the trunk light 30. Specifically, the second portion 42 is provided with a plurality of positioning holes 421 and a plurality of connecting holes 422. The positioning hole 421 can fit with a plurality of positioning pins 321 protruding vertically upward disposed on the trunk light 30. The connecting holes 422 may form a fixed connection with the trunk light 30 through connectors such as a bolt. Since the positioning holes 421 is usually larger in diameter than the connecting holes 412, the positioning holes 421 having a larger diameter can easily match the positioning pins 321 on the trunk light 30 during installation, so that the positioning pins 321 pass through the positioning holes 421, thereby the brackets 40 are located at a proper position with respect to the trunk light 30, and then connectors such as a bolt pass through the connecting holes 422 and fixed to the trunk light 30, thereby the brackets 40 are fixedly connected to the trunk light 30. According to the present embodiment, the plurality of positioning holes 421 are arranged in the width direction (Y direction) of the vehicle, because the brackets 40 and the side end portion 23 of the trunk garnish 20 have long strip shapes, and therefore, arranging the plurality of positioning holes 421 along the length direction of the vehicle may achieve better positioning effect.

In order to fix the connectors such as bolts passing through the connecting holes 422 to the trunk light 30, a fixing structure 322 for fixing the connectors such as bolts is 7 disposed on the trunk light 30, and the fixing structure 322 protrudes from the base surface of the trunk light 30. Therefore, in order to match the fixing structure 322, a plurality of bosses 423 are disposed on the brackets 40, and a plurality of connecting holes 422 are disposed on the plurality of bosses 423, so that connectors such as bolts may be fixed in the fixing structure 322 located under the bosses after they pass through the connecting holes 422. According to the present embodiment, the number of the bosses 423 corresponds to the number of the connecting holes 422.

The first portion 41 is fixedly connected with the side end portion 23 of the trunk lid garnish 20 by a first connecting structure 100, a second connecting structure 200, a third connecting structure 300, and a fourth connecting structure 400. The first connecting structure 100, the second connecting structure 200, the third connecting structure 300, and the fourth connecting structure 400 are sequentially arranged from the middle to the side end, that is, the fourth connecting structure 400 is located at the outermost, and the third connecting structure 300, the second connecting structure 200, and the first connecting structure 100 are sequentially arranged inwards. The first connecting structure 100, the second connecting structure 200, and the fourth connecting structure 400 form an X -direction positioning connection, and the third connecting structure 300 forms a Z-direction positioning connection. The first connecting structure 100, the second connecting structure 200, the third connecting structure 300, and the fourth connecting structure 400 are respectively formed by fit connection between the elements disposed on the first portion 41 and elements disposed on the side end portion 23 of the trunk li d garnish 20, but the prese n t disclosure is not limited thereto.

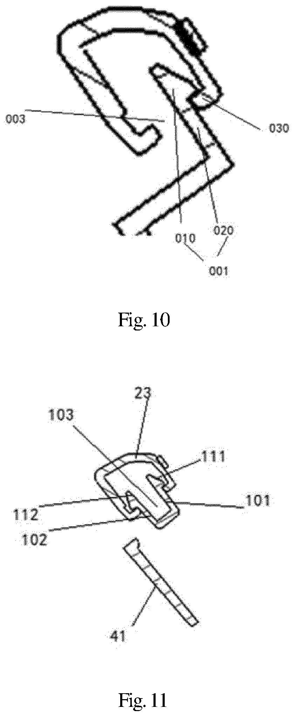

The first connecting structure 100 and the second connecting structure 200 respectively include a lock plate 001 disposed on the first portion 41 and extending from the first portion 41 to the trunk lid garnish 20; a lock slot 003 disposed on the side end portion 23 of the trunk lid garnish 20 to match to the lock plate 001 so as to forma fixed connection. When the side end portion 23 of the trunk lid garnish 20 is mounted to the first portion 41, the lock plate 001 may be inserted into the lock slot 003 to forma fixed connection in the X direction. Specifically, the lock plate 001 includes a lock plate body 020 extending from the first portion 41 toward the trunk lid garnish 20 and a lock block 010 disposed at an end of the lock plate body 020. When the side end portion 23 of the 8 trunk li d garnish 20 is mounted to the first portion 41, the lock plate 001 is inserted in to the lock slot 003 an d a lock block O I O at the end of the lock plate body 020 may be locked at the edge of the lock slot 003 and thus a fixed connection is formed as shown in Fig. 10.

Specifically, the lock block 010 includes a guide surface and a blocking surface, and a blocking plate 030 protruding toward the inside of the lock slot 003 is disposed at an edge of the lock slot 003 When the side end portion 23 of the trunk lid garnish 20 is mounted to the first portion 41, the blocking plate 030 may slide along the guide surface towards the first portion 41 and comes in contact with a blocking surface when it reaches the tail end of the guide surface and the blocking surface prevents the blocking plate 030 from slipping out and thus an X limitation is formed for the lock slot 003,such that the side end portion 23 of the trunk lid garnish 20 and the first portion 41 form a limit connection along the X direction.

According to the embodiment, as shown in Fig. 11, the first connecting structure 100 includes a first upper lock plate 101 and first lower lock plates 102 arranged in parallel upward and downward and a first lock slot 103, wherein first upper lock plate 101 and first lower lock plate 102 are inserted into the first lock slot 103. A lock block 111 is disposed at the upper side of an end portion of the first upper lock plate 101 and a lock block 112 is disposed at the lower side of an end portion of the first lower lock plate 102. As a result, when the first upper lock plate 101 and first lower lock plate 102 are inserted into the first lock slot 103, the lock block 111 may be locked at the upper edge of the first lock slot I 03 and the lock block 112 may be locked a t the lower edge of the first lock slot 103. In this way, upper and lower fixings can be formed, thereby enhancing the connection strength of the first connecting structure I 00. Further, holes are formed on the first portion 41 a t the lower side of the first lower lock plate 102.

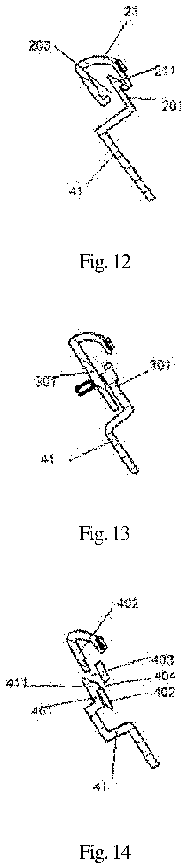

According to the embodiment, as shown in Fig. 12, the second connecting structure 200 includes a second lock plate 201 disposed at an upper edge of the first portion 41 and a second lock slot 203 disposed on the side end portion 23 of the trunk lid garnish 20. A lock block 211 is disposed at the upper side of the end of the second block plate 201. As a result, when the second block plate 201 is inserted into the second block slot 203, the lock block 211 may be locked at the edge of the second block slot 203, 9 thereby forming an X-direction limitation. Since the second connecting structure 200 is provided with one lock plate 201, the second lock slot 203 for fitting with the lock plate 201 has relatively smaller width than the first lock slot 103 for fitting with the upper and lower lock block in the first connecting structure 100. This is because the width of the trunk lid garnish is gradually narrowed from the middle to the two side ends. Therefore, at the position of the second connecting structure 200, the side end portion 23 of the trunk lid garnish 20 have no sufficient width to dispose lock slots sufficient for accommodating upper and lower lock plates and thus only one second lock slot 201 is disposed on the second connecting structure 200.

According to the embodiment, as shown in Fig. 13, the third connecting structure 300 includes a baffle 30 I disposed obliquely on the first portion 41 from the side end portion 23 of the trunk li d garnish 20 to the first portion 41; and a first insertion plate 302 disposed on the trunk lid garnish 20 and extending from the trunk lid garnish 20
to the first portion 41, wherein a plurality of ribs 303 are arranged on the first insertion plate 302 in parallel extending along the extending direction of the first insertion plate 302. The plurality of ribs 303 have a height gradually decreasing from the side end portion 23 of the trunk lid garnish 20 to the first portion 41 to match the baffle 301. The oblique directions of the baffle 301 and the rib 303 is to facilitate the first insertion plate 302 to slide under the baffle 301 along the oblique direction. After the first insertion plate 302 slides under the baffle 301, the baffle 302 comes in close contact with the plurality of ribs 303 on the first insertion plate 302, thereby limiting the plurality of ribs 303 on the first insertion plate 302 in the Z direction, and further limiting the side end portion 23 of the trunk lid garnish 20 in the Z direction.

According to the embodiment, as shown in Fig. 14, the fourth connecting structure 400 includes an insertion slot 404 disposed on the first portion 41; and a second insertion plate 402 disposed on the side end portion 23 of the trunk lid garnish 20 and extending from side end portion 23 of the trunk lid garnish 20 to the first portion 41. The second insertion plate 402 may be inserted into the insertion slot 404. Wherein a fourth lock plate 401 extending toward the trunk lid garnish 20 is disposed at the edge of the insertion slot 404, and a lock block 412 is disposed at the end of the fourth lock plate 401 and a lock hole 403 is formed on the second insertion plate 402. When the second 10 insertion plate 402 is inserted into the insertion slot 404, the lock block 412 on the fourth lock plate 401 may slide into the lock hole 403 on the second insertion plate 402 so as to forma limitation to the lock hole 403 and thus the fourth lock plate 401 disposed on the first portion 41 may form an X -direction limitation to the second insertion plate 402 disposed on the trunk lid garnish 20. Specifically, according to this embodiment, the fourth lock plate 401 may be disposed on the lower edge of the insertion slot 404, and the lock block 412 is disposed on the upper side of the end of the fourth lock p late body 411. In this way, the second insertion plate 402 is inserted into the insertion slot 404 above the fourth lock plate 401, and the lock block 412 upwardly protruding may be inserted into the lock hole 403 on the second insertion plate 402 when the second insertion plate 402 is inserted into a specific position., thereby, forming an X-direction restriction to prevent the second insertion plate 402 from sliding out in the reverse direction. The fourth connecting structure 400 is mainly considering that the outermost end portion of the trunk
lid garnish 20 has the narrowest width, which is enough to dispose similar lock slot structures as those of the first connecting structure I 00 and the second connecting structure 200, and thus a plate structure of the second insertion plate 402 requiring a smaller width is disposed at a position of the fourth connecting structure 400 and a lock hole 403 is disposed in the second insertion plate 402 to have the same role as the lock slot in the first connecting structure 100 and the second connecting structure 200, that is, to form an X -direction limitation with the lock block on the lock plate.

According to the description above, the brackets are mounted firstly on the trunk light, the brackets and trunk light which have been assembled together are then mounted on the sheet metal of the lower p late of trunk lid and then the trunk lid garnish is mounted. Since the trunk lid garnish is too long, the middle portion of the trunk lid garnish is installed on the sheet metal of the upper plate of the trunk lid and the two side end portions of the trunk lid garnish are then mounted on the brackets by the first connecting structure, second connecting structure, third connecting structure and fourth connecting structure, respectively. Since the first connecting structure, second connecting structure, third connecting structure and fourth connecting structure are arranged in the length direction of the trunk lid garnish, the side end portion of the trunk lid garnish may be well connected to the brackets by a plurality of connecting structures, thereby effectively ensuring gaps between the trunk lid garnish and the upper plate of the trunk lid and the 11 lower p late of the trunk lid in the X direction and improving the perceived quality of the vehicle.

The present disclosure also provides a vehicle including the trunk lid structure for a vehicle as described in embodiments above.

In summary, the trunk lid structure for a vehicle provided by the present disclosure includes a trunk lid body; a trunk light mounted on the trunk lid body; and a trunk lid garnish located above the trunk light, and the middle portion of the trunk lid garnish is installed on the trunk lid body and two side end portions of the trunk lid garnish are respectively mounted on the trunk light by brackets. As a result, the trunk lid garnish can better fit the upper panel of the trunk lid and the trunk light in the X and Z directions, thereby effectively improving gaps between the trunk lid garnish and the trunk lid and the trunk light in the X direction, thereby improving the perceived quality of the vehicle.

## Claims

1. A trunk lid structure for a vehicle, comprising:
trunk lid body (10), a trunk light (30) mounted on the trunk lid body (10), a trunk lid garnish (20), a middle portion (22) of the trunk lid garnish (20) mounted on the trunk lid body (10) and two side end portions (21,23) of the trunk lid garnish (20) respectively mounted on the trunk light (30) by brackets (40), **characterized in that** the trunk lid garnish (20) is located above the trunk light (30), the bracket (40) includes a first portion (41) extending in a vertical direction for fixedly connecting with the side end portion (21,23) of the trunk lid garnish (20) and a second portion (42) extending in a horizontal direction for fixedly connecting with the trunk light (30), the trunk lid (30) having positioning pins (321) protruding vertically upward to fit with positioning holes (421) provided in the second portion (42) of the bracket (40).

2. The trunk lid structure for a vehicle according to claim 1, **characterized in that**, the first portion (41) is fixedly connected with the side end portion (21,23) of the trunk lid garnish (20) through a first connecting structure (100), a second connecting structure (200), a third connecting structure (300) and a fourth connecting structure (400) sequentially arranged in a direction from the middle to the side end.

3. The trunk lid structure for a vehicle according to claim 2, **characterized in that** the first connecting structure (100) and the second connecting structure (200) respectively comprise a lock plate (001)disposed on the first portion (41) and extending from the first portion (41) to the trunk lid garnish (20); a lock slot (003) disposed on the trunk lid garnish (20) to match to the lock plate (001) so as to form a fixed connection.

4. The trunk lid structure fora vehicle according to claim 3, **characterized in that** the lock plate (001) comprises a lock plate body (020) extending from the first portion (41) to the trunk lid garnish (20) and a lock block (010) disposed at the end of the lock plate body (020).

5. The trunk lid structure for a vehicle according to claim 4, **characterized in that** the first connecting structure (100) comprises two lock plates (001) which are arranged in parallel and are inserted into one lock slot (003) on the trunk lid garnish (20) at the same time so as to form a fixed connection.

6. The trunk lid structure for a vehicle according to claim 5, **characterized in that** the lock block (010) of the upper lock plate is disposed on an upper side of the end of the corresponding lock plate body (020), and the lock block (010) of the lower lock plate is disposed on a lower side of the end of the corresponding lock plate body (020).

7. The trunk lid structure for a vehicle of claim 2, characterized that the third connecting structure (300) comprises a baffle (301) disposed obliquely on the first portion (41) from the trunk lid garnish (20) to the first portion (41), a first inserting plate (302) disposed on the trunk lid garnish (20) and extending from the trunk lid garnish (20) to the first portion (41) wherein a plurality of ribs is arranged on the first insertion plate (302) in parallel extending along the extending direction of the first insertion plate (302) and the plurality of ribs having a height gradually decreasing from the trunk lid garnish (20) to the first portion (41) to match the oblique direction of the baffle (301).

8. The trunk lid structure for a vehicle of claim 5, **characterized in that** the fourth connecting structure (400) comprises: an inserting slot (404) disposed on the first portion (41), a second inserting plate (402) disposed on the trunk lid garnish (20) and extending from the trunk lid garnish (20) to the first portion (41), wherein the lock plate (001) is disposed at an edge of the inserting slot (404) and extends toward the trunk lid garnish (20) , and a lock hole (403) corresponding to the lock block (411) of the lock plate (001) is disposed on the second inserting plate (402), when the second inserting plate (402) is inserted into the inserting slot (404), the lock block (411) matches to the lock hole (403) to forma fixed connection.

9. A vehicle comprising the trunk lid structure according to any one of claims 1-8.

## Patentansprüche

1. Kofferraumdeckelstruktur für ein Fahrzeug, umfassend: einen Kofferraumdeckelkörper (10), eine Kofferraumleuchte (30), die auf dem Kofferraumdeckelkörper (10) montiert ist, eine Kofferraumdeckelgarnierung (20), einen Mittelabschnitt (22) der Kofferraumdeckelgarnierung (20), die auf dem Kofferraumdeckelkörper (10) montiert ist, und zwei seitliche Endabschnitte (21, 23) der Kofferraumdeckelgarnierung (20), die jeweils auf der Kofferraumleuchte (30) durch Halterungen (40) montiert sind, **dadurch gekennzeichnet, dass** der Kofferraumdeckelgarnierung (22 ist 0) oberhalb der Kofferraumleuchte (30) angeordnet ist, wobei die Konsole (40) einen ersten Abschnitt (41), der sich in vertikaler Richtung erstreckt, um fest mit dem seitlichen Endabschnitt (21, 23) der Kofferraumdeckelverkleidung (20) verbunden zu werden, und einen zweiten Abschnitt (42), der sich in horizontaler Richtung erstreckt, um fest mit der Kofferraumleuchte (30) verbunden zu werden, umfasst, wobei der Kofferraumdeckel (30) Positionierstifte (321) aufweist, die vertikal nach oben vorstehen, um mit Positionierlöchern (4221) zu passen, die in dem zweiten Abschnitt (42222) der Konsole (40) der Konsole (40) der Konsole (40) vorgesehen sind.

2. Kofferraumdeckelstruktur für ein Fahrzeug nach Anspruch 1, **dadurch gekennzeichnet, dass** der erste Abschnitt (41) fest mit dem Seitenendabschnitt (21, 23) der Kofferraumdeckelverkleidung (20) durch eine erste Verbindungsstruktur (100), eine zweite Verbindungsstruktur (200), eine dritte Verbindungsstruktur (300) und eine vierte Verbindungsstruktur (400) verbunden ist, die aufeinander folgend in einer Richtung von der Mitte zum Seitenende angeordnet sind.

3. Kofferraumdeckelstruktur für ein Fahrzeug nach Anspruch 2, **dadurch gekennzeichnet, dass** die erste Verbindungsstruktur (100) und die zweite Verbindungsstruktur (200) jeweils eine Verriegelungsplatte (001) umfassen, die auf dem ersten Abschnitt (41) angeordnet ist und sich von dem ersten Abschnitt (41) zu der Kofferraumdeckelverkleidung (20) erstreckt; einen Verriegelungsschlitz (003), der auf der Kofferraumdeckelverkleidung (20) angeordnet ist, um mit der Verriegelungsplatte (001) zusammenzupassen, um eine feste Verbindung zu bilden.

4. Kofferraumdeckelstruktur für ein Fahrzeug nach Anspruch 3, **dadurch gekennzeichnet, dass** die Verriegelungsplatte (001) einen Verriegelungsplattenkörper (020), der sich von dem ersten Abschnitt (41) zu der Kofferraumdeckelverkleidung (20) erstreckt, und einen Verriegelungsblock (010) umfasst, der am Ende des Verriegelungsplattenkörpers (020) angeordnet ist.

5. Kofferraumdeckelstruktur für ein Fahrzeug nach Anspruch 4, **dadurch gekennzeichnet, dass** die erste Verbindungsstruktur (100) zwei parallel angeordnete Schlossplatten (001) umfasst, die gleichzeitig in einen Schlossschlitz (003) an der Kofferraumdeckelgarnierung (20) eingesetzt sind, um eine feste Verbindung zu bilden.

6. Kofferraumdeckelstruktur für ein Fahrzeug nach Anspruch 5, **dadurch gekennzeichnet, dass** der Schlossblock (010) der oberen Schlossplatte auf einer Oberseite des Endes des entsprechenden Schlossplattenkörpers (020) und der Schlossblock (010) der unteren Schlossplatte auf einer Unterseite des Endes des entsprechenden Schlossplattenkörpers (020) angeordnet ist.

7. Kofferraumdeckelstruktur für ein Fahrzeug nach Anspruch 2, **dadurch gekennzeichnet, dass** die dritte Verbindungsstruktur (300) eine Ablenkplatte (301) umfasst, die schräg auf dem ersten Abschnitt (41) von der Kofferraumdeckelverkleidung (20) zu dem ersten Abschnitt (41) angeordnet ist, wobei eine Vielzahl von Rippen auf der ersten Einsetzplatte (302) parallel angeordnet ist, die sich entlang der Erstreckungsrichtung der ersten Einsetzplatte (302) erstreckt, und die Vielzahl von Rippen eine Höhe haben, die von der Kofferraumdeckelverkleidung (20) zu dem ersten Abschnitt (41) allmählich abnimmt, um der Höhe anzupassen Richtung der Leitwand (301) einstellen.

8. Kofferraumdeckelstruktur für ein Fahrzeug nach Anspruch 5, **dadurch gekennzeichnet, dass** die vierte Verbindungsstruktur (400) umfasst: einen Einführungsschlitz (404), der auf dem ersten Abschnitt (41) angeordnet ist, eine zweite Einführungsplatte (402), die auf der Kofferraumdeckelgarnitur (20) angeordnet ist und sich von der Kofferraumdeckelgarnitur (20) zu dem ersten Abschnitt (41) erstreckt, wobei die Verriegelungsplatte (001) an einem Rand des Einführungsschlitzes (404) angeordnet ist und sich in Richtung der Kofferraumdeckelgarnitur (20) erstreckt 3) entsprechend dem Verriegelungsblock (411) der Verriegelungsplatte (001) auf der zweiten Einsteckplatte (402) angeordnet ist, wobei beim Einsetzen der zweiten Einsteckplatte (402) in den Einsteckschlitz (404) der Verriegelungsblock (411) mit der Verriegelungsbohrung (403) zu einer festen Verbindung zusammenpasst.

9. Fahrzeug, umfassend die Kofferraumdeckelstruktur nach einem der Ansprüche 1 bis 8.

## Revendications

1. Structure de capot de coffre pour véhicule, comprenant : un corps de capot de coffre (10), une lumière de coffre (30) montée sur le corps de capot de coffre (10), une garniture de capot de coffre (20), une partie médiane (22) de la garniture de capot de coffre (20) montée sur le corps de capot de coffre (10) et deux parties d'extrémité latérales (21, 23) de la garniture de capot de coffre (20) respectivement montée sur la garniture de coffre (30) par des supports (40), **caractérisée en ce que** la garniture de capot de coffre (20) situé au-dessus de la lumière de coffre (30), le support (40) comprend une première partie (41) s'étendant dans une direction verticale pour se connecter de manière fixe à la partie d'extrémité latérale (21, 23) de la garniture de couvercle de coffre (20) et une seconde partie (42) s'étendant dans une direction horizontale pour se connecter de manière fixe à la lumière de coffre (30), le couvercle de coffre (30) ayant des broches de positionnement (321) faisant saillie verticalement vers le haut pour s'adapter aux trous de positionnement (421) prévus dans la seconde partie (42) du support (40).

2. Structure de capot de coffre pour véhicule selon la revendication 1, **caractérisée en ce que** la première partie (41) est reliée fixement à la partie d'extrémité latérale (21, 23) de la garniture de capot de coffre (20) par l'intermédiaire d'une première structure de liaison (100), d'une deuxième structure de liaison (200), d'une troisième structure de liaison (300) et d'une quatrième structure de liaison (400) disposées séquentiellement dans une direction allant du milieu à l'extrémité latérale.

3. Structure de capot de coffre pour véhicule selon la revendication 2, **caractérisée en ce que** la première structure de liaison (100) et la deuxième structure de liaison (200) comprennent respectivement une plaque de verrouillage (001) disposée sur la première partie (41) et s'étendant de la première partie (41) à la garniture de capot de coffre (20); une fente de verrouillage (003) disposée sur la garniture de capot de coffre (20) pour s'adapter à la plaque de verrouillage (001) de manière à former une liaison fixe.

4. Structure de capot de coffre pour véhicule selon la revendication 3, **caractérisée en ce que** la plaque de serrure (001) comprend un corps de plaque de serrure (020) s'étendant de la première partie (41) à la garniture de capot (20) et un bloc de serrure (010) disposé à l'extrémité du corps de plaque de serrure (020).

5. Structure de capot de coffre pour véhicule selon la revendication 4, **caractérisée en ce que** la première structure de liaison (100) comprend deux plaques de verrouillage (001) disposées en parallèle et insérées simultanément dans une fente de verrouillage (003) sur la garniture de capot de coffre (20) de manière à former une liaison fixe.

6. Structure de capot de coffre pour véhicule selon la revendication 5, **caractérisée en ce que** le bloc de serrure (010) de la plaque de serrure supérieure est disposé sur un côté supérieur de l'extrémité du corps de plaque de serrure (020) correspondant, et le bloc de serrure (010) de la plaque de serrure inférieure est disposé sur un côté inférieur de l'extrémité du corps de plaque de serrure (020) correspondant.

7. Structure de capot de coffre pour véhicule selon la revendication 2, **caractérisée en ce que** la troisième structure de liaison (300) comprend une chicane (301) disposée obliquement sur la première partie (41) depuis la garniture de capot de coffre (20) vers la première partie (41) dans laquelle une pluralité de nervures est disposée sur la première plaque d'insertion (302) en parallèle s'étendant selon la direction d'extension de la première plaque d'insertion (302) et la pluralité de nervures ayant une hauteur décroissant progressivement depuis la garniture de capot de coffre (20) vers la première partie (41) pour s'adapter à la direction oblique le déflecteur (301).

8. Structure de capot de coffre pour véhicule selon la revendication 5, **caractérisée en ce que** la quatrième structure de liaison (400) comprend: une fente d'insertion (404) disposée sur la première partie (41), une deuxième plaque d'insertion (402) disposée sur la garniture de capot de coffre (20) et s'étendant de la garniture de capot de coffre (20) à la première partie (41), dans laquelle la plaque de verrouillage (001) est disposée au niveau d'un bord de la fente d'insertion (404) et s'étend vers la garniture de capot (20), et un trou de serrure (40) 3) correspondant au bloc de verrouillage (411) de la plaque de verrouillage (001) est disposé sur la seconde plaque d'insertion (402), lorsque la seconde plaque d'insertion (402) est insérée dans la fente d'insertion (404), le bloc de verrouillage (411) s'adapte au trou de verrouillage (403) pour former une connexion fixe.

9. Véhicule comprenant la structure de capot de coffre selon l'une quelconque des revendications 1 à 8.
